(19) Europäisches Patentamt

European Patent Office

Office européen des brevets

(11) **EP 4 660 010 A1**

(12) **EUROPEAN PATENT APPLICATION**
published in accordance with Art. 153(4) EPC

(43) Date of publication:
**10.12.2025  Bulletin 2025/50**

(21) Application number: **24749899.1**

(22) Date of filing: **12.01.2024**

(51) International Patent Classification (IPC):
**B60Q 1/00** (2006.01)      **F21S 43/14** (2018.01)
**F21S 43/31** (2018.01)      **F21V 23/00** (2015.01)
**F21W 103/60** (2018.01)     **F21Y 113/10** (2016.01)
**F21Y 115/10** (2016.01)

(52) Cooperative Patent Classification (CPC):
**B60Q 1/00; F21S 43/14; F21S 43/31; F21V 23/00;**
F21W 2103/60; F21Y 2113/10; F21Y 2115/10

(86) International application number:
**PCT/JP2024/000564**

(87) International publication number:
**WO 2024/161944 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **30.01.2023  JP 2023011805**

(71) Applicant: **Koito Manufacturing Co., Ltd.
Shinagawa-ku, Tokyo 141-0001 (JP)**

(72) Inventor: **SHIBATA Yuichi
Shizuoka-shi Shizuoka 424-8764 (JP)**

(74) Representative: **Algemeen Octrooi- en Merkenbureau B.V.
P.O. Box 645
5600 AP Eindhoven (NL)**

(54)  **ROAD SURFACE DRAWING DEVICE**

(57)   A road surface drawing device (10) includes: a road surface drawing lamp (11) that draws a pattern on a road surface and that is capable of changing a drawing color of the pattern; a brightness detector (20) that measures a brightness of the road surface or a surrounding environment thereof; and a controller (30) that determines the drawing color of the pattern based on an output of the brightness detector (20) and that controls the road surface drawing lamp (11) such that the pattern is drawn in the determined drawing color.

FIG. 2

EP 4 660 010 A1

**Description**

TECHNICAL FIELD

The present invention relates to a road surface drawing device that can be mounted in a vehicle such as, e.g., an automobile.

BACKGROUND ART

Conventionally, white light has been typically used for road surface drawing; however, an automotive lamp having a road surface drawing function of projecting a colored pattern other than white on a road surface has been proposed (see, for example, Patent Literature 1). By projecting various colored patterns onto a road surface, it is possible to more effectively convey information, such as alerting nearby vehicles and pedestrians, compared to conventional road surface drawing where only white light is used.

RELATED-ART LITERATURE

PATENT LITERATURE

Patent Literature 1: JP 2021-39866

SUMMARY OF INVENTION

TECHNICAL PROBLEM

The inventors of the present invention have studied the above-mentioned automotive lamp and have come to recognize the following problems. The inventors of the present invention have found that even if the fact that a pattern is projected onto the road surface can be recognized, the color of the pattern may be difficult to recognize depending on the surrounding conditions, for example, the brightness of the road surface or the surrounding environment. In other words, while a viewer can see that there is a contrast on the road surface caused by the projection of a pattern, there are cases where the viewer cannot see what color the pattern is drawn in. In such cases, information that depends on the color in which the pattern is drawn is less likely to be conveyed to the viewer. The inventors of the present invention have also found that the ease of recognition of the drawing color varies depending on the color in which the pattern is drawn.

The present invention has been made in view of such a situation, and an exemplary purpose of an embodiment thereof is to provide a road surface drawing device capable of adjusting a drawing color according to surrounding conditions.

SOLUTION TO PROBLEM

A road surface drawing device according to one embodiment of the present invention includes: a road surface drawing lamp that draws a pattern on a road surface and that is capable of changing a drawing color of the pattern; a brightness detector that measures a brightness of the road surface or a surrounding environment thereof; and a controller that determines the drawing color of the pattern based on an output of the brightness detector and that controls the road surface drawing lamp such that the pattern is drawn in the determined drawing color.

According to this embodiment, an appropriate drawing color can be selected according to the brightness of the background of the pattern, and the pattern can be drawn on the road surface in that color. For example, the use of a drawing color that is difficult to see because of a relatively bright road surface can be avoided. In this way, by adjusting the drawing color according to the surrounding conditions, the pattern drawn on the road surface can be easily recognized by the viewer.

The road surface drawing lamp is capable of changing the drawing color of the pattern from a plurality of colors including at least one chromatic color and white. The controller is configured to select either the colored mode or the achromatic mode based on the output of the brightness detector, determine the drawing color of a pattern from a plurality of colors in a colored mode, and determine the drawing color of a pattern to be white in an achromatic mode. In this way, it is possible to switch between the colored mode and the achromatic mode depending on the brightness measurement result. For example, if the road surface is evaluated to be sufficiently dark, the pattern can be drawn in color, and if not, the pattern can be drawn in white to make it easier to see.

The controller may acquire a luminance contrast between a luminance of the pattern on the road surface and a background luminance of the pattern based on the output of the brightness detector, compare the acquired luminance contrast to a first threshold, select the colored mode when the luminance contrast is above the first threshold, and select the achromatic mode when the luminance contrast is below the first threshold. In this way, it is possible to switch between the colored mode and the achromatic mode based on the measured luminance contrast.

The controller may compare the luminance contrast to a second threshold, which is smaller than the first threshold, turn on the road surface drawing lamp when the luminance contrast is above the second threshold, and turn off the road surface drawing lamp when the luminance contrast is below the second threshold. In this way, if the measured luminance contrast is quite small, the road surface drawing can be stopped. This makes it possible to avoid unnecessary drawing of a road surface in a situation where a pattern is completely or almost invisible even when the pattern is drawn.

A white pattern drawn in the achromatic mode may include an additional pattern in addition to a pattern obtained by achromatizing a colored pattern drawn in the colored mode. In this way, information that can be conveyed to the viewer by the color of a pattern in the colored mode can be conveyed to the viewer by utilizing an additional pattern in the achromatic mode where such color is lost.

The additional pattern may include text. In this way, information can be conveyed effectively using text.

The road surface drawing lamp may be capable of changing the drawing color of the pattern from a plurality of colors including at least one chromatic color and white, and the controller may determine whether or not each of the plurality of colors is available as a drawing color for the pattern based on the output of the brightness detector. In this way, an appropriate drawing color (e.g., a color with high visibility) can be selected according to the measurement result of the brightness, and the pattern can be drawn on the road surface in that color.

Optional combinations of the aforementioned constituting elements, and implementations of the invention in the form of methods, devices, systems, etc., may also be practiced as additional modes of the present invention.

ADVANTAGEOUS EFFECTS OF INVENTION

According to the present invention, a road surface drawing device is capable of adjusting a drawing color according to the surrounding conditions.

BRIEF DESCRIPTION OF DRAWINGS

[Fig. 1] Fig. 1 is a graph according to an embodiment that shows results of an experiment performed by the inventors of the present invention on how the ease of recognizing the color of a pattern depends on the brightness of the pattern.
[Fig. 2] Fig. 2 is a diagram showing the schematic configuration of a road surface drawing device according to the embodiment.
[Fig. 3] Fig. 3 is a flowchart according to the embodiment that illustrates a method for determining the drawing color of a pattern.
[Fig. 4] Fig. 4 is a diagram showing the schematic configuration of a road surface drawing device according to another embodiment.

DESCRIPTION OF EMBODIMENTS

Hereinafter, the present invention will be described based on preferred embodiments with reference to the drawings. The embodiments do not limit the invention and are shown for illustrative purposes, and not all the features described in the embodiments and combinations thereof are necessarily essential to the invention. The same or equivalent constituting elements, members, and processes illustrated in each drawing shall be denoted by the same reference numerals, and duplicative explanations will be omitted appropriately. The scales and shapes shown in the figures are defined for convenience's sake to make the explanation easy and shall not be interpreted limitatively unless otherwise specified. Terms like "first", "second", etc., used in the specification and claims do not indicate an order or importance by any means and are used to distinguish a certain feature from the others. Some of the components in each figure may be omitted if they are not important for explanation.

As mentioned at the beginning of this document, the inventors of the present invention have found that in road surface drawing where the drawing color of a pattern can be changed, it can be difficult to recognize the drawing color under certain circumstances. When the surrounding environment is relatively bright or the projected pattern is relatively dark, it can be difficult to identify the color of the pattern, even though the contrast caused by the pattern can be visible on the road surface.

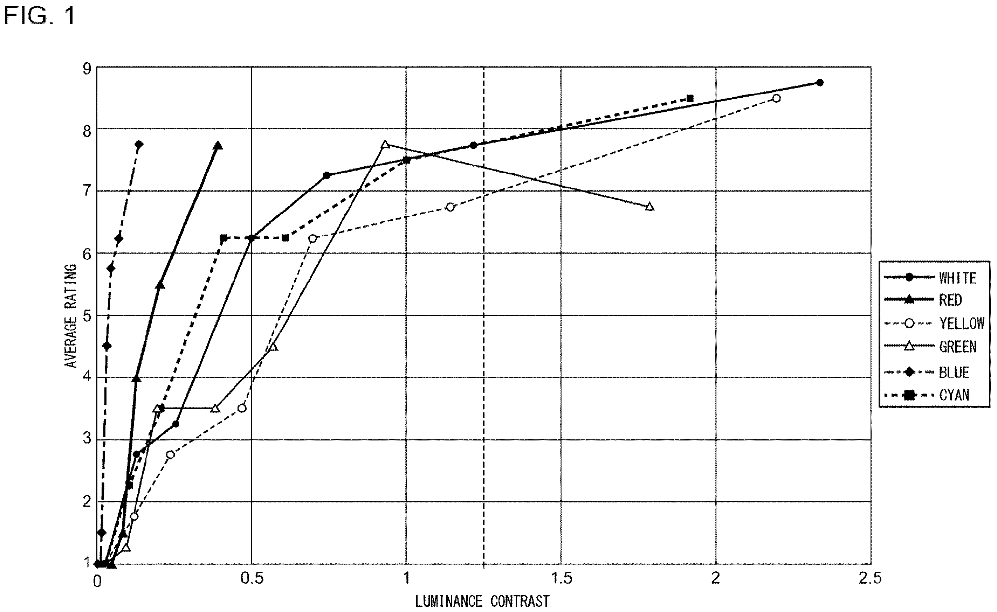

Fig. 1 is a graph according to an embodiment that shows results of an experiment performed by the inventors of the present invention on how the ease of recognizing the color of a pattern drawn on a road surface depends on the brightness of the pattern. This graph represents the results of a sensitivity test in which subjects were asked to judge whether or not they could recognize the colors of patterns projected with different colors. More specifically, the subjects scored the visibility of each of patterns projected in six colors, white, red, yellow, green, blue, and cyan. The scoring was done on a 9-point scale, with subjects giving a score of seven points or higher if the drawing color of a pattern was identifiable. The vertical axis of the graph represents the average score given by the subjects. Therefore, it can be considered that the color of the pattern is recognizable if a score of seven points or higher is given for this average rating and that the color of the pattern is unrecognizable if a score of less than seven points is given for the average rating.

The horizontal axis of the graph represents a luminance contrast as an example of a brightness index that represents the brightness of the surrounding environment such as a road surface. The luminance contrast represents how bright a pattern is against the background. The larger the value of the luminance contrast, the brighter the pattern is against the background, making it easier for the viewer to see the pattern. As is known, the luminance contrast is defined based on the luminance of the pattern itself and the luminance of the background of the pattern and can be calculated using the following expression.

Luminance contrast = ([pattern luminance] - [background luminance]) / [background luminance]

As can be understood from the graph, when the value of the luminance contrast exceeds about 1.2 (i.e., in the area to the right of the dashed vertical line in the graph), all the six color patterns have an average rating of over seven points. The pattern drawing colors can be recognized for all the colors. On the other hand, when the value of the luminance contrast is below this threshold (about 1.2) (in the area to the left of the dashed vertical line), not all the colors achieve an average rating of over seven points. Therefore, depending on the color, it becomes impossible to recognize what color the pattern is drawn in.

Drawing a colored pattern in a situation where the viewer can recognize the drawing color of a pattern is effective in information conveyance. This is because it is possible to convey information to the viewer including not only the meaning of the shape of the pattern but also a message added by the color of the pattern. However, even if a colored pattern is drawn in a situation where the drawing color of the pattern cannot be recognized or is difficult to recognize, the message according to the color will be lost or diminished. In such a case, there is little point in intentionally drawing a colored pattern.

Therefore, in this embodiment, depending on the brightness of the background, a pattern is drawn with color when the drawing color of the pattern can be recognized, while a pattern is drawn in white when the drawing color of the pattern cannot be recognized. More specifically, in the embodiment, a brightness index such as a luminance contrast, for example, may be acquired first, and the acquired brightness index may be compared to a threshold. Based on the relationship between the brightness index and the threshold, the drawing color of a pattern may be determined, for example, either a colored mode or an achromatic mode may be selected. In the colored mode, the drawing color of a pattern may be determined based on a plurality of colors (e.g., various colors that may be generated by the three primary colors and any mixture thereof), including at least one chromatic color. In the achromatic mode, the drawing color of a pattern may be determined to be white. The pattern may be drawn on a road surface in the determined drawing color. In this way, it is possible to avoid pointlessly drawing colored patterns in inappropriate situations.

In the achromatic mode, patterns may be drawn brighter than in the colored mode. This makes it possible to improve the visibility of a pattern in the achromatic mode.

For example, if the light source of a pattern has multiple individual light sources of different colors such as the three primary colors of red (R), green (G), and blue (B) and can generate white light by mixing colors, switching the color to draw the pattern to white can make it easier to draw the pattern brighter and make the pattern easier to see. This is because, while only a small number of individual light sources are turned on when drawing a pattern in a particular chromatic color (e.g., only the individual light source for red is turned on for a red pattern), multiple individual light sources are turned on simultaneously so as to draw a pattern by the sum of the light intensity in the case of white.

However, if the pattern is changed from its original color to white, the meaning carried by the original color in the pattern is lost or less likely to be conveyed, as described above. For example, when drawing a pattern that has the meaning of a prohibition or warning, the use of a warning color such as red is effective in conveying that information. If such a pattern is achromatized, its prohibition or warning meaning may be lost or diminished.

As an example, a case of a "No Entry" sign drawn on a road surface is considered. The design of the sign may vary from country to country or region to region; however, in Japan, for example, "No Entry" is expressed by a red circle with a white horizontal line in the center. If the red circle were changed to white, the meaning (i.e., the "No Entry" message) would be difficult to read from the white pattern after the change.

In the embodiment, a pattern may be changed from its original color to white, and an additional pattern may be added to the original pattern. The additional pattern may be any pattern that facilitates the conveyance of information and may include, for example, texts, other symbols, etc. For example, in the "No Entry" example, the white pattern may have the text "No Entry" added to the achromatized sign design. In this way, by using an additional pattern such as texts and symbols, information can be effectively conveyed to the viewer in the same way as with the original colored pattern.

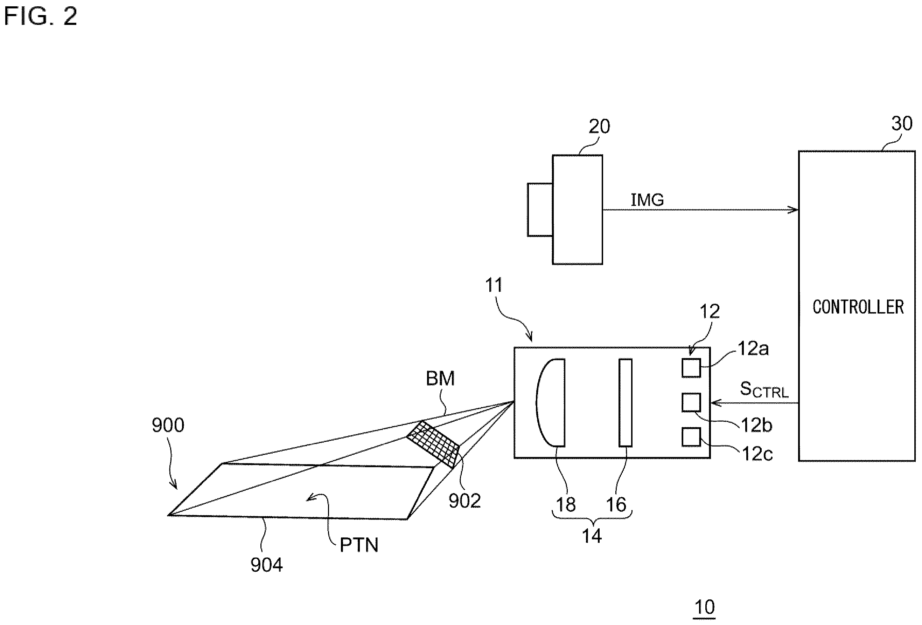

Fig. 2 is a diagram showing the schematic configuration of a road surface drawing device according to the embodiment. A road surface drawing device 10 is mounted on a vehicle such as an automobile, for example, and can be used to draw a pattern on a road surface from the vehicle. For example, the road surface drawing device 10 may be an automotive lamp such as a headlamp, a sign lamp, etc., mounted on the vehicle, or may be incorporated into such an automotive lamp and form a part thereof.

The road surface drawing device 10 includes a road surface drawing lamp 11, a brightness detector 20, and a controller 30. All of these components of the road surface drawing device 10 may be built into the same housing and may be communicatively connected to one another.

Alternatively, the components of the road surface drawing device 10 may be built into separate housings and connected communicatively to one another by electrical wiring such as a wire harnesses, for example. For example, at least one of the brightness detector 20 and the controller 30 may be housed in a housing separate from that of the road surface drawing lamp 11 and arranged away from the road surface drawing lamp 11. While the road surface drawing lamp 11 may be built into an automotive lamp, at least one of the brightness detector 20 and the controller 30 may be installed on the vehicle side.

The road surface drawing lamp 11 is configured to draw a pattern PTN on a road surface 900. Unlike other typical road surface drawing lamps, the road surface drawing lamp 11 is configured to be capable of changing the drawing color of the pattern PTN. For example, the road surface drawing lamp 11 is capable of changing the drawing color of the pattern PTN from a plurality of colors including at least one chromatic color and white. At least one chromatic color can include, for example, any chromatic color obtained by the three primary colors and any combination thereof.

As an exemplary configuration, the road surface drawing lamp 11 is configured to receive a control signal $S_{CTRL}$ from the controller 30 indicating a pattern PTN to be drawn on the road surface 900, project a drawing beam BM having an intensity distribution 902 in a beam cross-section according to the control signal $S_{CTRL}$ onto the road surface 900, and draw the pattern PTN on the road surface 900. The pattern PTN is configured within a projection area 904 of the drawing beam BM.

The road surface drawing lamp 11 has a plurality of individual light sources 12 emitting light of different colors from one another, e.g., a first individual light source 12a, a second individual light source 12b, a third individual light source 12c, and an optical system 14 configured to form a pattern PTN from light emitted by at least one individual light source 12 and project the pattern onto the road surface 900.

The individual light sources 12 can be individually switched on and off. By turning on at least one individual light source 12 and turning off the other individual light sources 12, light of a specific color corresponding to the turned-on individual light source 12 can be emitted as the drawing color of the pattern PTN. Furthermore, the individual light sources 12 may be individually adjustable in brightness, thereby adjusting the drawing color of the pattern PTN. The first individual light source 12a, the second individual light source 12b, and the third individual light source 12c may be assigned the three primary colors of red (R), green (G), and blue (B). In this case, by turning on all the individual light sources 12 simultaneously, white light can be generated by mixing the colors.

Each individual light source 12 may be a light emitting device such as, for example, an LED that emits light of the assigned color (e.g., the first individual light source 12a, second individual light source 12b, and third individual light source 12c may be a red LED, green LED, and blue LED, respectively). Alternatively, each individual light source 12 may be a combination of a color filter with an assigned color and a white light source.

An optical system 14 includes a pattern forming device 16. The pattern forming device 16 may be any device capable of providing an intensity distribution 902 according to the pattern PTN to the cross section of the drawing beam BM from the individual light source 12, and may be, for example, a reflective pattern forming device 16 such as a digital mirror device (DMD). Alternatively, the road surface drawing device 10 may include a device in which the individual light source 12 and the pattern forming device 16 are integrated, e.g., a liquid crystal device or a light emitting device array (e.g., micro LED).

The pattern forming device 16 is not limited to a device that is capable of changing the pattern PTN and may also form a fixed pattern PTN. The pattern forming device 16 may be, for example, a light shielding plate or another member with a slit or opening that corresponds to a pattern PTN to be drawn.

The optical system 14 may include at least one optical member 18, e.g., a lens, a reflector, or a combination thereof, downstream of the pattern forming device 16 with respect to the individual light sources 12. The optical member 18 is configured to project a drawing beam BM having an intensity distribution 902 formed by the pattern forming device 16 onto the road surface 900 so as to project the pattern PTN. If required, at least one other optical member may be provided upstream of the pattern forming device 16, i.e., between the individual light sources 12 and the pattern forming device 16.

The brightness detector 20 is configured to measure the brightness of the road surface 900 or the surrounding environment. As an example, the brightness detector 20 may be an on-board camera capable of imaging an area including the projection area 904 of the drawing beam BM on the road surface 900. Alternatively, the brightness detector 20 may be an illuminance meter that measures the environmental illuminance. The illuminance meter may be provided in a vehicle for on/off switching of automatic headlights.

The controller 30 is configured to, in response to a predetermined event, generate a control signal $S_{CTRL}$ representing a pattern PTN corresponding to the event and output the control signal to the road surface drawing lamp 11, thereby controlling the road surface drawing lamp 11 such that the pattern PTN is drawn on the road surface 900. The predetermined event is not limited to any particular event, but can include, for example, a variety of events such as approaching a pedestrian, entering an intersection, passing an oncoming vehicle, and the like. The controller 30 may detect the occurrence of the predetermined event based on an image captured by an on-board camera (camera image IMG).

In such road surface drawing control, the controller 30 may be configured to determine the drawing color of the pattern PTN based on an output of the brightness detector 20 (e.g., the camera image IMG or the illuminance meter measurement), and to control the road surface drawing lamp 11 such that the pattern PTN is drawn in the determined drawing color. As described in detail below, the controller 30 may also select either the colored mode or the achromatic mode based on the output of the brightness detector 20, determine the drawing color of the pattern PTN from a plurality of colors including at least one chromatic color and white in the colored mode, and determine the drawing color of the pattern PTN to be white in the achromatic mode. Thus, the control signal $S_{CTRL}$ can include data indicating the determined drawing color of the pattern PTN.

The controller 30 may be a lamp electronic control unit (ECU) that controls the road surface drawing lamps 11. Alternatively, the controller 30 may be a vehicle ECU that comprehensively controls the entire vehicle or a part of the vehicle. Alternatively, the controller 30 may include both the lamp ECU and the vehicle ECU. The ECUs can be implemented by a combination of a processor (hardware) such as a central processing unit (CPU) or microcontroller and a software program executed by the processor (hardware).

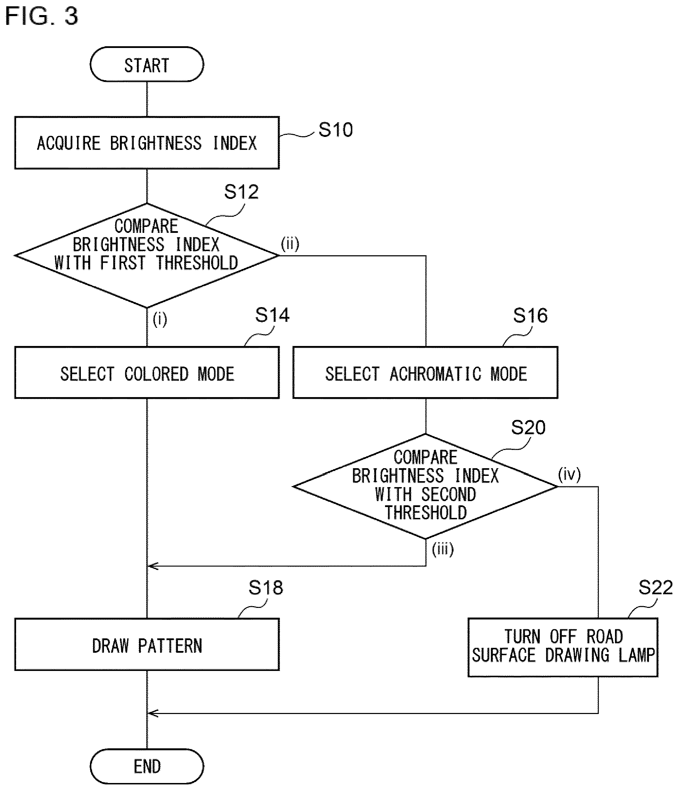

Fig. 3 is a flowchart according to the embodiment that illustrates a method for determining the drawing color of a pattern. In this control routine, as shown in the figure, a brightness index is obtained first when the process is started (S10). The controller 30 receives the output of the brightness detector 20 and obtains the brightness index based on this output.

For example, if the brightness detector 20 is a camera, the controller 30 may calculate the luminance contrast based on the camera image IMG that is input. Since the luminance contrast is defined by the luminance of the pattern PTN itself and the background luminance of the pattern PTN, as described above, the controller 30 may, for example, use known image processing to identify from the camera image IMG a first area in which the pattern PTN is projected and a second area around the first area in which the pattern PTN is not projected, measure the luminance values of the first area and the second area, and calculate the luminance contrast from these luminance values. Both the first and second areas may be within the projection area 904.

In this case, in order to obtain the luminance contrast, the controller 30 may control the road surface drawing lamp 11 such that a test pattern is drawn. The test pattern may be a pattern to be actually drawn on the road surface 900 in response to the currently detected event, or may be any pattern that the road surface drawing device 10 is capable of drawing. The test pattern may be drawn in a specific drawing color (e.g., green).

Alternatively, in order to obtain a luminance contrast, the controller 30 may identify the first area on the road surface 900 that is illuminated with light by a lamp other than the road surface drawing lamp 11 (e.g., a head lamp) and the second area that is not illuminated with light, and measure the luminance value of the first area and the luminance value of the second area. The controller 30 may consider the luminance value of the first area as the luminance of the pattern PTN and the luminance value of the second area as the background luminance, and calculate the luminance contrast from these luminance values.

Next, the acquired brightness index is compared to the first threshold (S12). The controller 30 compares the acquired luminance contrast values with the first threshold of luminance contrast. The first threshold is set to be a boundary between whether or not the viewer can recognize the drawing color of the pattern PTN when the road surface drawing device 10 projects the pattern PTN onto the road surface 900. The first threshold can be set appropriately based on the empirical knowledge of the designer of the road surface drawing device 10 or experiments or simulations conducted by the designer. When relying on the experimental results shown in Fig. 1 for the setting, the first threshold may be, for example, about 1.2.

The controller 30 selects the colored mode when the luminance contrast is above the first threshold (S12 (i) and S14) and selects the achromatic mode when the luminance contrast is below the first threshold (S12 (ii) and S14). The drawing color of the pattern PTN is then determined according to the result of this mode selection. In the colored mode, the drawing color of the pattern PTN is determined from a plurality of colors including at least one chromatic color. The drawing color of the pattern PTN can be selected from various colors that can be expressed by the individual light sources 12, and the pattern PTN is drawn in its original drawing color. In the achromatic mode, on the other hand, the drawing color of pattern PTN is determined to be white. The achromatized pattern PTN will be drawn. The controller 30 then controls the road surface drawing lamp 11 such that the pattern PTN is drawn in the determined drawing color (S18).

Thus, according to the embodiment, a road surface drawing device 10 capable of adjusting the drawing color according to the surrounding conditions can be provided.

A white pattern PTN drawn in the achromatic mode may be a pattern PTN that is obtained by simply achromatizing a colored pattern PTN drawn in the colored mode. In other words, the only difference between a white pattern PTN in the achromatic mode and a colored pattern PTN in the colored mode may be the presence or absence of color.

Alternatively, in the achromatic mode, the controller 30 may control the road surface drawing lamp 11 such that the pattern PTN is drawn brighter compared to the colored mode. In this way, the visibility of the pattern PTN in the achromatic mode can be improved.

In the achromatic mode, the controller 30 may control the road surface drawing lamp 11 to add an additional pattern to the white pattern PTN that is achromatized from the colored pattern PTN. The additional pattern may include text. This allows information to be effectively conveyed to the viewer even in the achromatic mode.

Optionally in the process of Fig. 3, the acquired brightness index may be compared to the second threshold (S20). As shown in Fig. 3, S20 may be performed between S16 and S18, i.e., when the achromatic mode is selected and before the pattern PTN is drawn. Alternatively, S20 may be performed at any time after S10, i.e., after the acquisition of the brightness index.

The second threshold represents that the background of the pattern PTN is bright enough to make it impossible or difficult for the viewer to recognize the existence of the pattern PTN itself even if the road surface drawing device 10 projects the pattern PTN onto the road surface 900. The second threshold can be set appropriately based on the empirical knowledge of the designer of the road surface drawing device 10 or experiments or simulations conducted by the designer. When luminance contrast is used as the brightness index, the second threshold may be smaller than the first threshold, e.g., less than 1/10 of the first threshold.

The controller 30 may turn on the road surface drawing lamp 11 when the luminance contrast is above the second threshold ((iii) of S20) and turn off the road surface drawing lamp 11 when the luminance contrast is below the second threshold ((iv) of S20 and S22). In this way, in situations where the pattern PTN is not visible on the road surface 900, road surface drawing is stopped so as to avoid unnecessary projection in such situations.

Instead of the luminance contrast, the controller 30 may use the brightness of the road surface 900 (e.g., the brightness of the projection area 904 when the drawing beam BM is not projected) as a brightness index. The controller 30 may obtain the brightness of the road surface 900 from the camera image IMG using, for example, known image processing. Alternatively, the controller 30 may obtain the brightness of the road surface 900 or the surrounding environment (e.g., ambient illuminance) from the measurement results of an illuminance meter serving as the brightness detector 20.

In this case, the controller 30 may compare the acquired brightness value to the first threshold for the brightness (S12), select the colored mode if the brightness value is below the first threshold (S12(i) and S14), and select the achromatic mode if the brightness value is above the first threshold. Even in this way, the colored mode can be used in situations where the background is relatively dark and the pattern PTN is easily visible, and the achromatic mode can be used in situations where the background is relatively bright and the pattern PTN is difficult to see.

As understood from the graph in Fig. 1, the ease of recognition of the drawing color varies depending on the color in which the pattern is drawn. For example, a pattern PTN projected in blue or red is easily recognizable even if the luminance contrast is small, whereas a pattern PTN projected in yellow is not.

Therefore, the controller 30 may determine whether or not each of the plurality of colors is available as a drawing color for the pattern PTN based on the output of the brightness detector 20. In other words, a different first threshold may be set for each color, and availability may be determined for each color based on a comparison of the brightness index and each first threshold. Even in this way, a road surface drawing device 10 capable of adjusting the drawing color according to the surrounding conditions can be provided.

The invention is not limited to the above-mentioned embodiments and exemplary variations, and additional modifications, such as a design change, may be added thereto on the basis of knowledge of those skilled in the art. It should be understood that any embodiment and/or exemplary variation to which additional modifications are added are also included in the scope of the invention. Any new embodiments resulting from the combination of any two or more of the above-described embodiments or the combination of any of the above-described embodiments with the exemplary variations or the above-described embodiments and the exemplary variations with any of the following modifications has each an advantageous effect enjoyed by each of the original embodiment, the original exemplary variation, and modification as well.

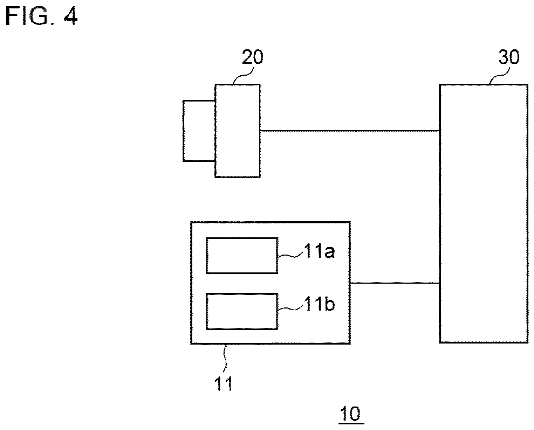

In the above embodiment, a case where one road surface drawing lamp 11 is switched between being used as a chromatic light source and a white light source has been explained as an example; however, the present invention is not limited to this. In one embodiment, as shown in Fig. 4, the road surface drawing device 10 may include a road surface drawing lamp 11 that is separately provided with a chromatic light source 11a and a white light source 11b that are capable of changing the drawing color of a pattern. The road surface drawing device 10 includes a brightness detector 20 and a controller 30 in the same way as in the embodiment described above. The controller 30 is configured to select either the colored mode or the achromatic mode based on the output of the brightness detector 20, determine the drawing color of a pattern from colors that can be expressed by the chromatic light source 11a in the colored mode, and determine the drawing color of a pattern PTN in the achromatic mode to be white. The chromatic light source 11a is used in the colored mode, and the white light source 11b is used in the achromatic mode. By turning on one of the chromatic light source 11a and the white light source 11b and turning off the other, the user can switch between the colored and achromatic modes.

The present invention is explained using specific terms based on the embodiments. However, the embodiments only show one aspect of the principle and application of the present invention, and many modifications and changes in arrangement may be made in the embodiments without departing from the spirit of the present invention defined in the claims.

INDUSTRIAL APPLICABILITY

The present invention is applicable to a road surface drawing device that can be mounted in a vehicle such as, e.g., an automobile.

REFERENCE SIGNS LIST

10 road surface drawing device, 11 road surface drawing lamp, 20 brightness detector, 30 controller

**Claims**

1. A road surface drawing device comprising:

   a road surface drawing lamp that draws a pattern on a road surface and that is capable of changing a drawing color of the pattern;
   a brightness detector that measures a brightness of the road surface or a surrounding environment thereof; and
   a controller that determines the drawing color of the pattern based on an output of the brightness detector and that controls the road surface drawing lamp such that the pattern is drawn in the determined drawing color.

2. The road surface drawing device according to Claim 1,

   wherein the road surface drawing lamp is capable of changing the drawing color of the pattern from a plurality of colors including at least one chromatic color and white, and
   wherein the controller selects either a colored mode or an achromatic mode based on the output of the brightness detector, determines the drawing color of the pattern from the plurality of colors in the colored mode, and determines the drawing color of the pattern to be white in the achromatic mode.

3. The road surface drawing device according to Claim 2, wherein the controller acquires a luminance contrast between a luminance of the pattern on the road surface and a background luminance of the pattern based on the output of the brightness detector, compares the acquired luminance contrast to a first threshold, selects the colored mode when the luminance contrast is above the first threshold, and selects the achromatic mode when the luminance contrast is below the first threshold.

4. The road surface drawing device according to Claim 3, wherein the controller compares the luminance contrast to a second threshold, which is smaller than the first threshold, turns on the road surface drawing lamp when the luminance contrast is above the second threshold, and turns off the road surface drawing lamp when the luminance contrast is below the second threshold.

5. The road surface drawing device according to any one of Claims 2 through 4, wherein a white pattern drawn in the achromatic mode includes an additional pattern in addition to a pattern obtained by achromatizing a colored pattern drawn in the colored mode.

6. The road surface drawing device according to Claim 5, wherein the additional pattern includes text.

7. The road surface drawing device according to claim 1,

   wherein the road surface drawing lamp is capable of changing the drawing color of the pattern from a plurality of colors including at least one chromatic color and white, and
   the controller determines whether or not each of the plurality of colors is available as a drawing color for the pattern based on the output of the brightness detector.

FIG. 1

FIG. 2

FIG. 3

```
                    ┌─────────────┐
                    │    START    │
                    └──────┬──────┘
                           │
          ┌────────────────┴────────────────┐      S10
          │   ACQUIRE BRIGHTNESS INDEX       │~
          └────────────────┬────────────────┘
                           │         S12
                          ╱ ╲
                        ╱     ╲
                      ╱ COMPARE ╲
                    ╱ BRIGHTNESS  ╲   (ii)
                    ╲   INDEX     ╱─────────────────┐
                      ╲WITH FIRST╱                  │
                        ╲THRESHOLD                  │
                          ╲ ╱                       │
                       (i) │                        │
          ┌───────────────┴──────┐ S14    ┌─────────┴──────────────┐ S16
          │  SELECT COLORED MODE │~       │ SELECT ACHROMATIC MODE │~
          └───────────────┬──────┘        └─────────┬──────────────┘
                          │                          │         S20
                          │                        ╱ ╲
                          │                      ╱     ╲
                          │                    ╱ COMPARE ╲
                          │                  ╱ BRIGHTNESS  ╲  (iv)
                          │                  ╲   INDEX     ╱──────────┐
                          │                    ╲WITH SECOND          │
                          │                      ╲THRESHOLD          │
                          │                        ╲ ╱               │
                          │                    (iii)│                │
          ┌───────────────┴──────┐ S18             │                │
          │     DRAW PATTERN     │~                │      ┌─────────┴──────────────┐ S22
          └───────────────┬──────┘                        │   TURN OFF ROAD        │~
                          │                                │ SURFACE DRAWING LAMP   │
                          │                                └─────────┬──────────────┘
                          │                                          │
                    ┌─────┴───────┐                                  │
                    │     END     │←─────────────────────────────────┘
                    └─────────────┘
```

FIG. 4

10

## INTERNATIONAL SEARCH REPORT

| International application No. |
| --- |
| **PCT/JP2024/000564** |

**A.    CLASSIFICATION OF SUBJECT MATTER**

*B60Q 1/00*(2006.01)i; *F21S 43/14*(2018.01)i; *F21S 43/31*(2018.01)i; *F21V 23/00*(2015.01)i; *F21W 103/60*(2018.01)n;
*F21Y 113/10*(2016.01)n; *F21Y 115/10*(2016.01)n
FI:    B60Q1/00 G; F21S43/31; F21S43/14; F21V23/00 140; F21V23/00 113; F21Y115:10; F21Y113:10; F21W103:60

According to International Patent Classification (IPC) or to both national classification and IPC

**B.    FIELDS SEARCHED**

Minimum documentation searched (classification system followed by classification symbols)

B60Q1/00; F21S43/14; F21S43/31; F21V23/00; F21W103/60; F21Y113/10; F21Y115/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2019-51793 A (SUBARU CORP.) 04 April 2019 (2019-04-04) | 1 |
|  | paragraphs [0006]-[0015], [0018]-[0039], fig. 1-4 |  |
| Y |  | 2, 7 |
| A |  | 3-6 |
| Y | JP 2016-5923 A (DENSO CORPORATION) 14 January 2016 (2016-01-14) | 2, 7 |
|  | paragraphs [0011]-[0101], fig. 1-13 |  |
| A |  | 1, 3-6 |

☐ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 February 2024** | **19 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (July 2022)

**INTERNATIONAL SEARCH REPORT**
Information on patent family members

International application No.

**PCT/JP2024/000564**

| Patent document cited in search report | | | Publication date (day/month/year) | Patent family member(s) | | | Publication date (day/month/year) |
|---|---|---|---|---|---|---|---|
| JP | 2019-51793 | A | 04 April 2019 | (Family: none) | | | |
| JP | 2016-5923 | A | 14 January 2016 | WO | 2015/194131 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021039866 A